# EUROPÄISCHE PATENTSCHRIFT

(11) **EP 1 478 862 B1**
(45) Veröffentlichungstag und Bekanntmachung des Hinweises auf die Patenterteilung: **21.12.2005**
(21) Anmeldenummer: 03709646.8
(22) Anmeldetag: 24.02.2003
(51) Int. Cl.: F16B 39/04, B60B 3/14

(54) **RADSICHERUNGSSYSTEM, INSBESONDERE FÜR KRAFTFAHRZEUGE DES RENNSPORTS**
WHEEL SECURING SYSTEM, ESPECIALLY FOR RACING CARS
SYSTEME DE FIXATION DE ROUE, EN PARTICULIER POUR VEHICULES AUTOMOBILES DE COURSE

(30) Priorität: 25.02.2002 DE 20202894 U
(43) Veröffentlichungstag der Anmeldung: 24.11.2004
(73) Patentinhaber: CarboSystems GmbH, 56651 Niederzissen (DE)
(72) Erfinder: HARTELT, Arndt, 56766 Ulmen (DE); BECKER, Marcus, 59939 Olsberg (DE); GERL, Oswald, 56651 Niederzissen (DE)
(74) Vertreter: Rumrich, Gabriele
(86) Internationale Anmeldenummer: PCT/DE2003/000584
(87) Internationale Veröffentlichungsnummer: WO 2003/072963

(56) Entgegenhaltungen:
- US-A- 841 025
- US-A- 3 712 356
- US-A- 4 725 174
- US-A- 5 408 854

## Beschreibung

Die Erfindung betrifft ein Radsicherungssystem, insbesondere für Kraftfahrzeuge des Rennsports, nach dem Oberbegriff des ersten Patentanspruchs. Ähnliche Sicherungssysteme sind aus der US-A-841025 und der US-A-3712356 bekannt.

Nach DE 198 29 723 A1 ist eine Vorrichtung zum Sichern einer Radmutter auf einer Radnabe eines Kraftfahrzeuges bekannt, wobei ein manuell betätigbarer Sperrriegel verwendet wird, der auf einem Bolzen über eine Stelleinrichtung in eine Freigabe- und Arretierstellung zur Radmutter verschwenkbar ist. Die manuelle Verstellung ist jedoch sehr aufwendig. Eine Vorrichtung zum Verdrehen und Sichern einer zentralen Radmutter eines Kraftfahrzeugrades mittels radial nach außen verstellbarer Rastkugeln, die in Aufnahmen eines innenliegenden Verriegelungsabschnittes der Radmutter einrasten, und welche mittels eines Werkzeuges beim Radwechsel betätigbar ist, beschreibt DE 38 44 169. Diese Lösung ist jedoch relativ aufwendig herstellbar.

Aufgabe der Erfindung ist es, ein Radsicherungssystem zu entwickeln, welches einen einfachen Aufbau aufweist, das unbeabsichtigte Lösen der Radmutter und des Rades während der Fahrt sicher verhindert und mittels eines entsprechenden Werkzeuges beim Wechseln des Rades betätigbar ist.

Diese Aufgabe wird erfindungsgemäß mit den Merkmalen des ersten Schutzanspruchs gelöst.

Das Radsicherungssystem dient dabei insbesondere für Kraftfahrzeuge des Rennsports, zur Lagesicherung einer Felge auf einer Radnabe mittels einer Radmutter, wobei die Radmutter mittels einer, in der Radnabe angeordneten mechanischen Stelleinrichtung, welche wenigstens einen Sicherungsbolzen aufweist, in Verriegelungsstellung auf der Radnabe durch einen ersten Anschlag des Sicherungsbolzens axial fixiert ist. Erfindungsgemäß weist der Sicherungsbolzen einen zweiten Anschlag auf, der auf der radabgewandten Seite der Radmutter an eine Kontur der Radmutter anlegbar ist, und eine radiale Bewegung des Sicherungsbolzens verhindert.

Der Sicherungsbolzen ist dabei über wenigstens ein, in der Stelleinrichtung angeordnetes Stellelement radial verstellbar
- zwischen einer Montagestellung, in welcher die Radmutter montierbar oder demontierbar ist und
- einer Verriegelungsstellung, in welcher der Sicherungsbolzen die Radmutter axial fixiert.

Die Stelleinrichtung ist in die Radnabe einschiebbar und die Radnabe weist an ihrem, die Radmutter überragenden freien Bereich wenigstens einen Durchbruch auf, durch welchen der Sicherungsbolzen reicht, welcher in Verriegelungsstellung die Außenkontur der Radmutter zumindest teilweise überragt.

Der zweite Anschlag des Sicherungsbolzens wird durch einen, im Vergleich zur Anlagefläche der Mutter in Richtung zur Felge vorstehenden, Bereich gebildet wird der radial an eine sich anschließende Fläche der Radmutter anlegbar ist.

Die Stelleinrichtung besteht aus einem Gehäuse, in dem der Sicherungsbolzen radial entgegen der Rückstellkraft des Stellelements verschiebbar ist. Bevorzugt wird der Sicherungsbolzen mittels der Rückstellkraft des Stellelements in Verriegelungsposition gehalten, wobei der Sicherungsbolzen wenigstens einen dritten Anschlag aufweist, der am Innendurchmesser der Radnabe anliegt und die radiale Bewegung des Sicherungsbolzens begrenzt. Vorzugsweise ist dabei das Stellelement als Druckfeder ausgebildet.

Das Gehäuse weist vorzugsweise zum Einschieben in die Radnabe eine zylindrische Außenkontur auf, deren Außendurchmesser im wesentlichen dem Innendurchmesser der Radnabe entspricht. Eine axiale Bohrung mit Gewinde im Zylindermittelpunkt dient zum Herausziehen der Stelleinrichtung aus dem Gehäuse.

Der Sicherungsbolzen ist in einen Führungs- und einen, den ersten und den zweiten Anschlag aufweisenden Sicherungsbereich unterteilt, wobei der Führungsbereich des Sicherungsbolzens von einer radialen Bohrung im Gehäuse aufgenommen wird. Der Führungsbereich schließt durch eine, innen an der zylindrischen Wandung der Radnabe anliegende und den dritten Anschlag bildende, Schulter ab.

Der Sicherungsbereich des Sicherungsbolzens weist auf der, der Radmutter zugewandten Seite, eine Vertiefung in Gehäuselängsrichtung auf, welche in radialer Richtung die dem Sicherungsbolzen zugewandte Seite der Radmutter (Radmutterbund) überragt. Der Nutgrund bildet dabei den ersten Anschlag (axial) für die Radmutter und der außen liegende achsparallele Schenkel der Nut bildet den zweiten Anschlag (radial) zur Verhinderung der radialen Bewegung des Sicherungsbolzens entgegen der Kraft des Stellelements.

Der Sicherungsbereich des Sicherungsbolzens weist auf der dem Gehäuse abgewandten Stirnfläche einen konischen Verlauf auf, und ist dadurch leicht mittels eines entsprechenden Werkzeuges beim Montieren oder Demontieren der Radmutter zusammendrückbar, wobei der Konus den kleinsten Durchmesser auf der der Radmutter abgewandten Seite aufweist.

Die zur Radsicherung eingesetzten Sicherungsbolzen werden so über dem Umfang des Gehäuses aufgeteilt, dass sich eine der Anzahl der Sicherungsbolzen entsprechende Anzahl von gleichgroßen Kreissegmenten ergibt.

Bevorzugt werden zwei im Winkel von 180° angeordnete Sicherungsbolzen eingesetzt, wobei dann der Führungsbereich in der Stelleinrichtung als eine radiale Durchgangsbohrung, von der beide Sicherungsbolzen aufgenommen werden, ausgebildet ist. Zwischen den zwei Sicherungsbolzen ist dann nur eine Druckfeder angeordnet, die für beide Sicherungsbolzen als Stellelement wirkt.

Mit der erfindungsgemäßen Lösung wird ein Radsicherungssystem geschaffen, welches einen einfachen Aufbau aufweist und mittels eines entsprechenden Werkzeuges beim Wechseln des Rades betätigbar ist. Es wird eine hohe Sicherheit gegen das unbeabsichtigte Lösen der Radmutter während der Fahrt geschaffen, da die Radmutter mit dem Sicherungsbolzen axial gesichert wird und der Sicherungsbolzen durch seinen zusätzlichen zweiten Anschlag in seiner Verriegelungsposition fixiert wird.

Es wurde in zahlreichen Tests festgestellt, dass auch bei einer sich während der Fahrt lösenden Radmutter, diese mit dem erfindungsgemäßen Radsicherungssystem auf der Radnabe gehalten wurde. Dadurch bleibt das Rad auch bei gelöster Radmutter auf der Radnabe!

Die Erfindung wird nachfolgend anhand eines Ausführungsbeispieles und zugehöriger Zeichnungen näher erläutert.

Es zeigen:

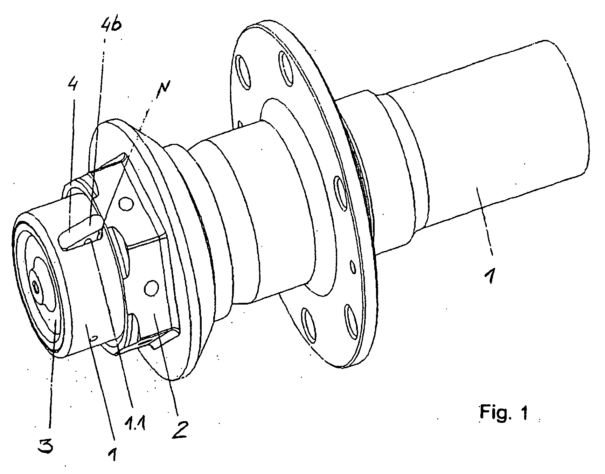

- Fig. 1:: Zusammenbaudarstellung des Radsicherungssystems in dreidimensionaler Ansicht,
- Fig. 2:: Längsschnitt des Sicherungsbolzens,
- Fig, 2a:: Vorderansicht des Sicherungsbolzens
- Fig. 3,: Draufsicht des Sicherungsbolzens,
- Fig. 4:: dreidimensionale Ansicht des Sicherungsbolzens,
- Fig. 5:: Draufsicht auf das Gehäuse,
- Fig. 6:: Schnitt A-A gem. Fig. 5,
- Fig. 7:: Schnitt B-B gem. Fig. 6,
- Fig. 8:: dreidimensionale Darstellung des Gehäuses,
- Fig. 9:: Schnittdarstellung der Radnabe,
- Fig. 10:: Zusammenbauzeichnung im Längsschnitt.

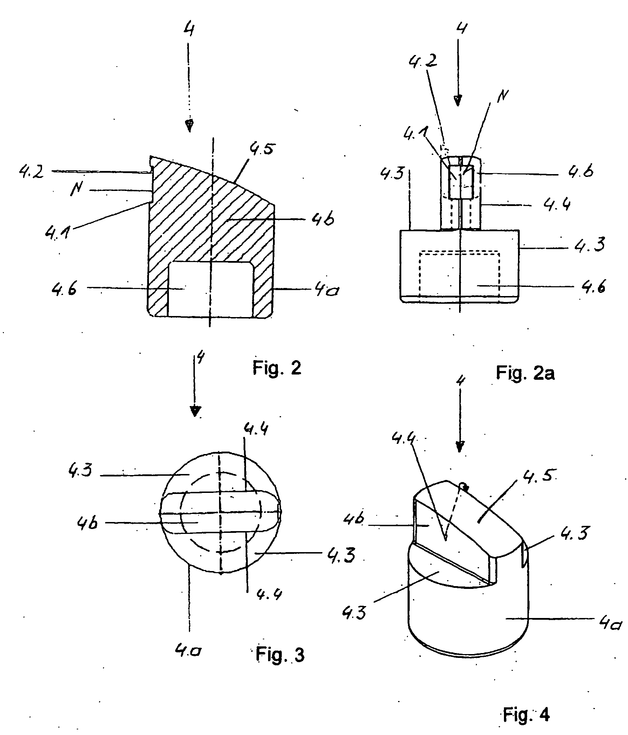

Auf der Radnabe 1 wird eine nicht dargestellte Felge mittels einer Radmutter 2 fixiert, wobei die Radmutter 2 mittels der in der Radnabe 1 angeordneten mechanischen Stelleinrichtung 3, welche zwei im Winkel von 180° angeordnete Sicherungsbolzen 4 aufweist, gesichert wird. Die Sicherungsbolzen 4 ragen jeweils mit ihrem Sicherungsbereich 4b durch einen Durchbruch 1.1 in der Radnabe 1. Der Sicherungsbolzen 4 weist in seinem Sicherungsbereich 4a, Richtung zur aufgeschraubten Radmutter 2, eine Nut N auf. Der Nutgrund bildet dabei einen ersten Anschlag 4.1 zur axialen Sicherung der Radmutter 2 und der außenliegende achsparallele Schenkel der Nut N bildet den zweiten Anschlag 4.2 (radial) zur Verhinderung der radialen Bewegung des Sicherungsbolzens 4 entgegen der Kraft des hier nicht sichtbaren Stellelements (S. Fig. 2). Mittels des Stellelements werden die Sicherungsbolzen 4 radial nach außen gedrückt, wobei sie am Innendurchmesser der Radnabe 1 mit einem dritten Anschlag 4.3 anliegen (Fig. 4).

In Fig. 2 bis 4 wird der Sicherungsbolzen 4 in Einzeldarstellung gezeigt. Er ist in der Art eines Bolzens mit kreisförmigem Querschnitt dargestellt. Der kreisförmige Querschnitt bildet den Führungsbereich 4a und verringert sich, wodurch zwei Schultern gebildet werden, die den dritten Anschlag 4.3 (innen an der Radnabe 1) in Verriegelungsposition bilden. Es schließt sich der Sicherungsbereich 4b an. Der Sicherungsbereich 4b weist zwei zueinander parallele Seitenwände 4.4 auf und ist in einem radienförmigen Verlauf in Aufschraubrichtung (für Radmutter) mit einer Montageschräge 4.5 abgeschrägt. In Richtung zur montierten Radmutter (hier nicht dargestellt) ist im Sicherungsbereich 4b die Nut N eingebracht. Der Nutgrund bildet den ersten Anschlag 4.1 und die obere Seitenkante den zweiten Anschlag 4.2. Der Sicherungsbolzen weist gem. Fig. 2 und Fig. 2a eine Bohrung 4.6 für die Aufnahme der Druckfeder (hier nicht dargestellt) auf.

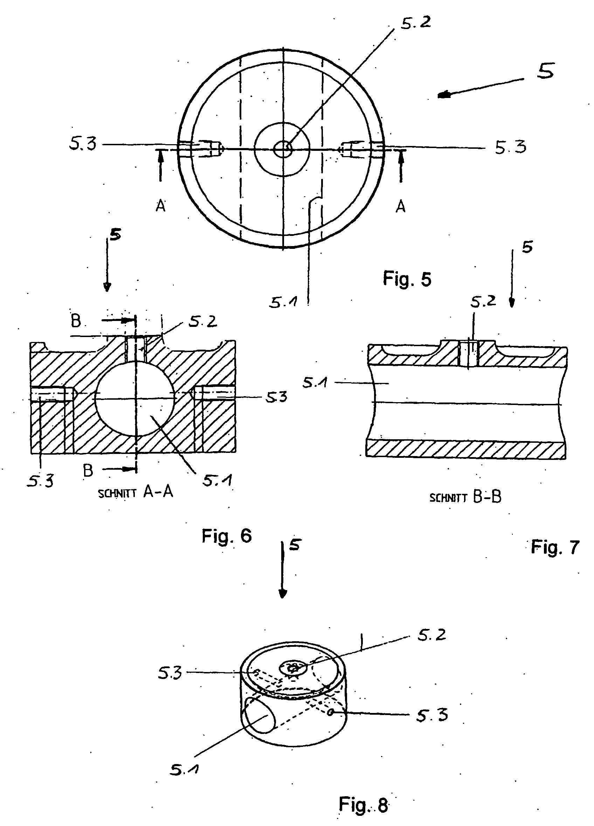

Die Stelleinrichtung 3 für die Betätigung der Sicherungsbolzen 4 besteht gem. Fig. 5 bis 8 aus einem Gehäuse 5, welches eine radiale Durchgangsbohrung 5.1 aufweist. Die Durchgangsbohrung 5.1 dient zur Aufnahme der Sicherungsbolzen 4 und der Druckfeder D (s. Fig. 10).

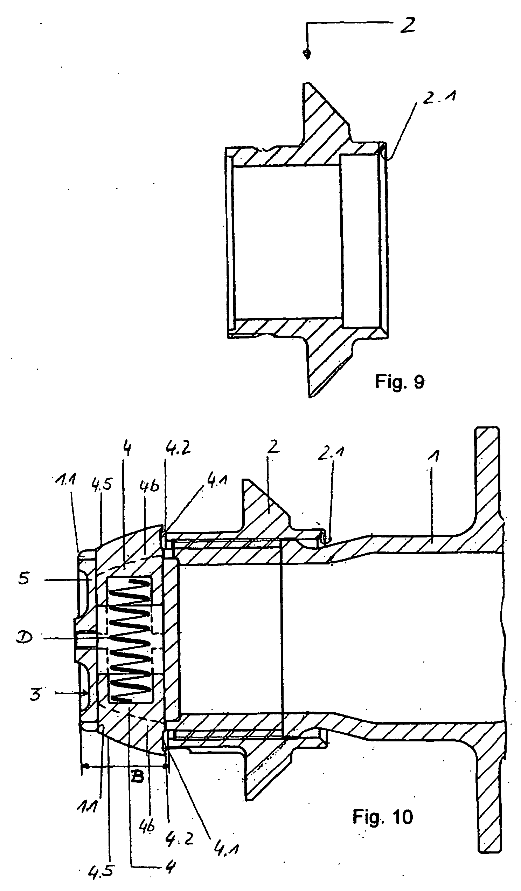

Es ist weiterhin eine mittige axiale Gewindebohrung 5.2 vorgesehen, die zum Herausziehen des Gehäuses 5 aus der Radnabe 1 dient. Zwei zur Durchgangsbohrung 5.1 um 90° versetzte Gewindebohrungen 5.3 dienen zur Lagefixierung des Gehäuses 5 in der Radnabe 1. Der Längsschnitt der Radmutter 2 ist in Fig. 9 dargestellt. Die Radmutter 2 weist in Montagerichtung eine Schräge 2.1 auf, deren Winkel der Montageschräge 4.5 der Sicherungsbolzen 4 angepasst ist, so dass beim Aufschrauben der Radmutter 2 die Schräge 2.1 über den kleinsten Bereich der Montageschräge 4.5 greift und beim weiteren Aufschrauben die Sicherungsbolzen 4 entgegen der Federkraft der Druckfeder D soweit zusammengedrückt werden, dass ein darübergleiten der Radmutter 2 beim weiteren Aufschraubvorgang möglich ist.

Die Zusammenbauzeichnung mit auf der Radnabe 1 montierter Radmutter 2 im Längsschnitt zeigt Fig. 10. Ein Bereich B der Radnabe 1 überragt die Radmutter 2. In diesem Bereich B der Radnabe 1 befindet sich die Stelleinrichtung 3 für die Betätigung der Sicherungsbolzen 4. Die Radnabe 1 weist dabei zwei um 180° versetzte Durchbrüche 1.1 auf, durch welche jeweils der Sicherungsbereich 4b der Sicherungsbolzen 4 ragt. Die Stelleinrichtung 3 für die Sicherungsbolzen 4 besteht aus einem Gehäuse 5 und einer Druckfeder D. Die Sicherungsbolzen 4 werden durch die zwischen ihnen angeordnete Druckfeder D nach außen gedrückt und liegen mit ihrem hier nicht sichtbaren dritten Anschlag am Innendurchmesser der Radnabe 1 in Verriegelungsposition an.

Das Gehäuse 4 weist eine zylindrische Außenkontur auf, deren Außendurchmesser im wesentlichen dem Innendurchmesser der Radnabe 1 entspricht.

Die Wirkungsweise des Radsicherungssystems ist folgende:

Die Stelleinrichtung 3 mit darin befindlichen, entgegen der Kraft der Rückstellfeder D zusammengedrückten Sicherungsbolzen 4, wird in die Radnabe 1 eingeschoben, so dass der Sicherungsbereich 4a der Sicherungsbolzen 4 durch die beiden Durchbrüche 1.1 in der Radnabe 1 schnappt, wobei sich der dritte Anschlag 4.3 der Sicherungsbolzen 4 innen an der Radnabe 1 anlegt und die radiale Bewegung nach außen begrenzt.

Die Radmutter 2 weist in Richtung zur Felge eine Schräge 2.1 auf. Beim Aufschrauben der Radmutter 1 greift die Schräge 1.1 über die Montageschräge 4.5 der beiden Sicherungsbolzen 4, wodurch diese entgegen der Kraft der Druckfeder D so lange zusammengedrückt werden, bis die Radmutter 2 über die Sicherungsbolzen 4 hinweggeschraubt ist. Nach dem Überschrauben der Radmutter 2 drückt die Druckfeder D dann die Sicherungsbolzen 4 wieder radial nach außen. Der erste Anschlag 4.1 der Sicherungsbolzen bildet nun einen axialen Anschlag für die Radmuter 2. Löst sich die Radmutter, so drückt sie gegen diesen Anschlag 4.1. Eine radiale Bewegung der Sicherungsbolzen 4 ist nun nicht möglich, da die achsparallele Außenkante einen zweiten Anschlag 4.2 bildet, der sich an den Außendurchmesser der Radnabe 1 anlegt. Löst sich die Radmutter 2 unbeabsichtigt, so legt sich ihre in Richtung zu den Sicherungsbolzen 4 weisende Stirnfläche an die Sicherungsbolzen 4 an, der zweite Anschlag 4.2 drückt gegen den Bund der Radmutter 2 und fixiert den Sicherungsbolzen 4.2, so dass er sich nicht radial nach innen bewegen kann und die Radmutter 2 wird somit auf der Radnabe 1 gehalten. Dabei drücken die Sicherungsbolzen 4 mit ihrem Sicherungsbereich 4a axial gegen die radabgewandten Bereiche der Durchbrüche 1.1 in der Randnabe 1, so dass die beim Lösen der Räder auf die Radmutter wirkende Axialkraft über die Sicherungsbereiche 4a der Sicherungsbolzen übertragen und über die radabgewandten Bereiche der Durchbrüche 1.1 in der Radnabe 1 aufgenommen wird. Das Demontieren ist nicht näher dargestellt, dabei erfolgt das Wechseln der Räder mit einem Werkzeug, welches ebenfalls eine Schräge aufweist und die Sicherungsbolzen 4 zusammengedrückt, wonach die Radmutter 2 von der Radnaben 1 abgeschraubt werden kann.

Es wird somit eine äußerst einfache Sicherungseinrichtung geschaffen.

Neben dem vorgenannten Ausführungsbeispiel mit zwei Sicherungsbolzen ist es auch möglich, nur einen oder mehr als zwei Sicherungsbolzen zu verwenden.

## Patentansprüche

1. Radsicherungssystem, insbesondere für Kraftfahrzeuge des Rennsports, zur Lagesicherung einer Felge auf einer Radnabe (1) mittels einer Radmutter (2), wobei die Radmutter (2) mittels einer, in der Radnabe (1) angeordneten mechanischen Stelleinrichtung (3), welche wenigstens ein Sicherungselement (4) aufweist, in Verriegelungsstellung auf der Radnabe durch einen ersten Anschlag (4.1) des Sicherungselementes axial fixiert ist, wobei das Sicherungselement als Sicherungsbolzen (4) ausgebildet ist, **dadurch gekennzeichnet, dass** der Sicherungsbolzen (4) einen zweiten Anschlag (4.2) aufweist, der auf der radabgewandten Seite der Radmutter (2) an eine Kontur der Radmutter (2) anlegbar ist, und eine radiale Bewegung des Sicherungsbolzens (4) verhindert.

2. Radsicherungssystem nach Anspruch 1, **dadurch gekennzeichnet, dass** der Sicherungsbolzen (4) über wenigstens ein, in der Stelleinrichtung (3) angeordnetes, Stellelement radial verstellbar ist
- zwischen einer Montagestellung, in welcher die Radmutter (2) montierbar oder demontierbar ist und
- einer Verriegelungsstellung, in welcher der Sicherungsbolzen (4) die Radmutter (2) axial fixiert.

3. Radsicherungssystem nach Anspruch 1 und 2, **dadurch gekennzeichnet, dass** die Stelleinrichtung (3) in die Radnabe (1) einschiebbar ist und dass die Radnabe (1) an ihrem, die Radmutter (2) überragenden freien Bereich wenigstens einen Durchbruch (1.1) aufweist, durch welchen der Sicherungsbolzen (4) reicht, welcher in Verriegelungsstellung die Außenkontur der Radmutter (2) zumindest teilweise überragt.

4. Radsicherungssystem nach einem der Ansprüche 1 bis 3, **dadurch gekennzeichnet, dass** der radabgewandte Bereich des Durchbruchs (1.1) der Radnabe (1) als Anschlag des Sicherungsbolzens (4) bei einer Axialbelastung des Sicherungsbolzens (4) durch die Radmutter (2) dient.

5. Radsicherungssystem nach einem der Ansprüche 1 bis 4, **dadurch gekennzeichnet, dass** der zweite Anschlag (4.2) des Sicherungsbolzens (4) durch einen im Vergleich zur Anlagefläche der Radmutter (2) in Richtung zur Felge vorstehenden Bereich gebildet wird.

6. Radsicherungssystem nach einem der Ansprüche 1 bis 5, **dadurch gekennzeichnet, dass** die Stelleinrichtung (3) aus einem Gehäuse (5) besteht, in dem der Sicherungsbolzen (4) radial entgegen der Rückstellkraft des Stellelements verschiebbar ist.

7. Radsicherungssystem nach einem der Ansprüche 1 bis 6, **dadurch gekennzeichnet, dass** der Sicherungsbolzen (4) mittels der Rückstellkraft des Stellelements in Verriegelungsposition gehalten wird, wobei der Sicherungsbolzen (4) wenigstens einen dritten Anschlag (4.3) aufweist, der am Innendurchmesser der Radnabe (1) anliegt und die radiale Bewegung des Sicherungsbolzens (4) begrenzt.

8. Radsicherungssystem nach Anspruch 7, **dadurch gekennzeichnet, dass** das Stellelement als Druckfeder (D) ausgebildet ist.

9. Radsicherungssystem nach einem der Ansprüche 6 bis 8, **dadurch gekennzeichnet, dass** das Gehäuse (5) im wesentlichen eine zylindrische Außenkontur aufweist.

10. Radsicherungssystem nach einem der Ansprüche 6 bis 9, **dadurch gekennzeichnet, dass** das Gehäuse (5) eine axiale Gewindebohrung (5.2) im Zylindermittelpunkt aufweist.

11. Radsicherungssystem nach einem der Ansprüche 1 bis 10, **dadurch gekennzeichnet, dass** die Sicherungsbolzen (4) in einen Führungsbereich (4a) und einen, den ersten und den zweiten Anschlag aufweisenden Sicherungsbereich (4b) unterteilt sind.

12. Radsicherungssystem nach Anspruch 11, **dadurch gekennzeichnet, dass** der Führungsbereich (4a) des Sicherungsbolzens (4) von einer radialen Bohrung im Gehäuse (5) aufgenommen wird.

13. Radsicherungssystem nach Anspruch 11 und 12, **dadurch gekennzeichnet, dass** der Führungsbereich (4a) eine, innen an der zylindrischen Wandung der Radnabe (1) anliegende und den dritten Anschlag (4.3) bildende, Schulter aufweist.

14. Radsicherungssystem nach einem der Ansprüche 11 bis 13, **dadurch gekennzeichnet, dass** der Sicherungsbereich (4b) des Sicherungsbolzens (4) auf der der Radmutter (2) zugewandten Seite eine Nut (N) in Gehäuselängsrichtung aufweist, welche in radialer Richtung die dem Sicherungsbolzen (4) zugewandte Seite der Radmutter (2) überragt.

15. Radsicherungssystem nach einem der Ansprüche 1 bis 14, **dadurch gekennzeichnet, dass** der Sicherungsbereich (4b) des Sicherungsbolzens (4) auf der dem Gehäuse (5) abgewandten Stirnfläche einen konischen Verlauf aufweist.

16. Radsicherungssystem nach Anspruch 15, **dadurch gekennzeichnet, dass** der Konus den kleinsten Durchmesser auf der der Radmutter (2) abgewandten Seite aufweist.

17. Radsicherungssystem nach einem oder mehreren Ansprüchen 1 bis 16, **dadurch gekennzeichnet, dass** die zur Radsicherung eingesetzten Sicherungsbolzen (4) so über dem Umfang des Gehäuses (5) aufgeteilt werden, dass sich eine der Anzahl der Sicherungsbolzen (4) entsprechende Anzahl von gleichgroßen Kreissegmenten ergibt.

18. Radsicherungssystem nach Anspruch 17, **dadurch gekennzeichnet, dass** bei Verwendung von zwei im Winkel von 180° angeordneten Sicherungsbolzen (4) der Führungsbereich (4a) in Form der radialen Bohrung in der Stelleinrichtung (3) als radiale Durchgangsbohrung (5.1) ausgebildet ist.

19. Radsicherungssystem nach Anspruch 18, **dadurch gekennzeichnet, dass** zwischen den zwei Sicherungsbolzen (4) die Druckfeder (D) angeordnet ist, die für beide Sicherungsbolzen (4) als Stellelement wirkt.

## Claims

1. A wheel securing system, especially for racing sport motor vehicles, for securing the position of a wheel rim on a wheel hub (1) by means of a wheel nut (2), with the wheel nut (2) being axially fixed in the locking position on the wheel hub by a first stop (4.1) of the securing element by means of mechanical actuating device (3) which is arranged in the wheel hub (1) and comprises at least one securing element (4), with the securing element being configured as a fastening bolt (4), **characterized in that** the fastening bolt (4) comprises a second stop (4.2) which can be placed on the side of the wheel nut (2) averted from the wheel against a contour of the wheel nut (2) and prevents a radial movement of the fastening bolt (4).

2. A wheel securing system according to claim 1, **characterized in that** the fastening bolt (4) is radially adjustable by way of at least one actuating element arranged in the actuating device (3)
- between a mounting position in which the wheel nut (2) can be mounted or dismounted, and
- a locking position in which the fastening bolt (4) axially fixes the wheel nut (2).

3. A wheel securing system according to claim 1 and 2, **characterized in that** the actuating device (3) can be slid into the wheel hub (1) and that the wheel hub (1) comprises at least one breakthrough (1.1) in its free regions protruding beyond the wheel nut (2), with the fastening bolt (4) protruding through said breakthrough and at least partly protruding in the locked position beyond the external shape of the wheel nut (2).

4. A wheel securing system according to one of the claims 1 to 3, **characterized in that** the region of the breakthrough (1.1) of the wheel hub (1) which is averted from the wheel is used as a stop of the fastening bolt (4) during an axial loading of the fastening bolt (4) by the wheel nut (2).

5. A wheel securing system according to one of the claims 1 to 4, **characterized in that** the second stop (4.2) of the fastening bolt (4) is formed by a region which protrudes in the direction towards the wheel rim in comparison with the contact surface of the wheel nut (2).

6. A wheel securing system according to one of the claims 1 to 5, **characterized in that** the actuating device (3) consists of a housing (5) in which the fastening bolt (4) is displaceable radially against the restoring force of the actuating element.

7. A wheel securing system according to one of the claims 1 to 6, **characterized in that** the fastening bolt (4) is held in the locking position by means of the restoring force of the actuating element, with the fastening bolt (4) comprising at least a third stop (4.3) which rests on the inner diameter of the wheel hub (1) and limits the radial movement of the fastening bolt (4).

8. A wheel securing system according to claim 7, **characterized in that** the actuating element is configured as a pressure spring (D).

9. A wheel securing system according to one of the claims 6 to 8, **characterized in that** the housing (5) substantially comprises a cylindrical external outline.

10. A wheel securing system according to one of the claims 6 to 9, **characterized in that** the housing (5) comprises an axial threaded bore (5.2) in the central point of the cylinder.

11. A wheel securing system according to one of the claims 1 to 10, **characterized in that** the fastening bolts (4) are subdivided into a guide region (4a) and a securing region (4b) comprising the first and second stop.

12. A wheel securing system according to claim 11,
**characterized in that** the guide region (4a) of the fastening bolt (4) is received by a radial bore in the housing (5).

13. A wheel securing system according to claim 11 and 12,
**characterized in that** the guide region (4a) comprises a shoulder resting on the inside on the cylindrical wall of the wheel hub (1) and forming the third stop (4.3).

14. A wheel securing system according to one of the claims 11 to 13, **characterized in that** the securing region (4b) of the fastening bolt (4) comprises a groove (N) in the longitudinal direction of the housing on the side averted from the wheel nut (2), which groove projects beyond the side of the wheel nut (2) facing the fastening pin (4) in the radial direction.

15. A wheel securing system according to one of the claims 1 to 14, **characterized in that** the securing region (4b) of the fastening pin (4) has a conical progress on the face side averted from the housing (5).

16. A wheel securing system according to claim 15,
**characterized in that** the cone has the smallest diameter on the side averted from the wheel nut (2).

17. A wheel securing system according to one or several claims 1 to 16, **characterized in that** the fastening bolts (4) used for securing the wheel are divided over the circumference of the housing (5) in such a way that a number of equally large segments of a circle is obtained which corresponds to the number of fastening bolts (4).

18. A wheel securing system according to claim 17,
**characterized in that** when using two fastening bolts (4) arranged at an angle of 180° the guide region (4a) in the form of the radial bore is formed in the actuating device (3) as a radial through bore (5.1).

19. A wheel securing system according to claim 18,
**characterized in that** the pressure spring (D) is arranged between the two fastening bolts (4), which pressure spring acts for both fastening bolts (4) as the actuating element.

## Revendications

1. Système de fixation de roues, notamment pour des voitures de course, pour le blocage en position d'une jante sur un moyeu (1) au moyen d'un écrou (2) de roue, l'écrou (2) de roue étant fixé axialement en position de verrouillage sur le moyeu contre une première butée (4.1) d'un élément de fixation (4) au moyen d'un dispositif de commande (3) mécanique monté sur le moyeu (1) et comportant au moins un élément de fixation (4), cet élément de fixation étant conformé en forme de boulon de fixation (4), **caractérisé en ce que** le boulon de fixation (4) comporte une deuxième butée (4.2) qui est apte à venir en appui contre un contour de l'écrou de roue (2) sur la face de l'écrou (2) de roue détournée de la roue et empêche un déplacement radial du boulon de fixation (4).

2. Système de fixation de roues selon la revendication 1, **caractérisé en ce que** le boulon de fixation (4) est pilotable radialement par l'intermédiaire d'au moins un élément de commande disposé dans l'organe de commande (3)
- entre une position de montage dans laquelle l'écrou de roue (2) est montable ou démontable et
- une position de verrouillage dans laquelle le boulon de fixation (4) fixe l'écrou (2) de roue de manière axiale.

3. Système de fixation de roues selon la revendication 1 et 2, **caractérisé en ce que** l'organe de commande (3) est apte à être glissé dans le moyeu (1) et que le moyeu (1) comporte, dans sa zone libre dépassant l'écrou (2) de roue, au moins un perçage (1.1) à travers lequel s'étend le boulon de fixation (4) qui dépasse du moins partiellement le contour extérieur de l'écrou (2) de roue en position de verrouillage.

4. Système de fixation de roues selon l'une quelconque des revendications 1 à 3, **caractérisé en ce que** la zone détournée de la roue du perçage (1.1) du moyeu (1) sert de butée au boulon de fixation (4) lorsque l'écrou (2) de roue exerce un effort axial sur le boulon de fixation (4).

5. Système de fixation de roues selon l'une quelconque des revendications 1 à 4, **caractérisé en ce que** la deuxième butée (4.2) du boulon de fixation (4) est formée par une zone en saillie en direction de la jante par rapport à la surface d'appui de l'écrou (2) de roue.

6. Système de fixation de roues selon l'une quelconque des revendications 1 à 5, **caractérisé en ce que** l'organe de commande (3) est constitué par un boîtier (5) dans lequel le boulon de fixation (4) est mobile en coulissement radial contre la force de rappel de l'élément de commande.

7. Système de fixation de roues selon l'une quelconque des revendications 1 à 6, **caractérisé en ce que** le boulon de fixation (4) est maintenu en position de verrouillage au moyen de la force de rappel de l'élément de commande, le boulon de fixation (4) comportant au moins une troisième butée (4.3) qui est en appui contre le diamètre intérieur du moyeu (1) et limite le déplacement radial du boulon de fixation (4).

8. Système de fixation de roues selon la revendication 7, **caractérisé en ce que** l'élément de commande est conformé en forme de ressort de compression (D).

9. Système de fixation de roues selon l'une quelconque des revendications 6 à 8, **caractérisé en ce que** le boîtier (5) comporte un contour extérieur sensiblement cylindrique.

10. Système de fixation de roues selon l'une quelconque des revendications 6 à 9, **caractérisé en ce que** le boîtier (5) comporte un trou taraudé (5.2) axial au centre du cylindre.

11. Système de fixation de roues selon l'une quelconque des revendications 1 à 10, **caractérisé en ce que** les boulons de fixation (4) sont divisés en une zone de guidage (4a) et une zone de fixation (4b) comportant la première et la deuxième butée.

12. Système de fixation de roues selon la revendication 11, **caractérisé en ce que** la zone de guidage (4a) du boulon de fixation (4) est reçue par un trou radial dans le boîtier (5).

13. Système de fixation de roues selon la revendication 11 et 12, **caractérisé en ce que** la zone de guidage (4a) comporte un épaulement en appui interne contre la paroi cylindrique du moyeu (1) et formant la troisième butée (4.3).

14. Système de fixation de roues selon l'une quelconque des revendications 11 à 13, **caractérisé en ce que** la zone de fixation (4b) du boulon de fixation (4) comporte, sur la face tournée vers l'écrou (2) de roue, une gorge (N) qui s'étend dans le sens de la longueur du boîtier et qui dépasse suivant la direction radiale la face de l'écrou (2) de roue tournée vers le boulon de fixation (4).

15. Système de fixation de roues selon l'une quelconque des revendications 1 à 14, **caractérisé en ce que** la face d'extrémité détournée du boîtier (5) de la zone de fixation (4b) du boulon de fixation (4) présente une courbe conique.

16. Système de fixation de roues selon la revendication 15, **caractérisé en ce que** le cône a le plus petit diamètre sur la face détournée de l'écrou (2) de roue.

17. Système de fixation de roues selon une ou plusieurs des revendications 1 à 16, **caractérisé en ce que** les boulons de fixation (4) employés pour fixer les roues sont répartis sur la circonférence du boîtier (5) de manière à obtenir des portions de cercle de mêmes dimensions dont le nombre correspond au nombre de boulons de fixation (4).

18. Système de fixation de roues selon la revendication 17, **caractérisé en ce que**, si l'on utilise deux boulons de fixation (4) disposés de manière à former entre eux un angle de 180°, la zone de guidage (4a) en forme de trou radial dans l'organe de commande (3) est conformée en forme de trou traversant radial (5.1).

19. Système de fixation de roues selon la revendication 18, **caractérisé en ce que** le ressort de compression (D) faisant office d'élément de commande des deux boulons de fixation (4) est disposé entre les deux boulons de fixation (4).
